# EUROPEAN PATENT APPLICATION

(11) **EP 1 002 964 A1**
(43) Date of publication of application: **24.05.2000**
(21) Application number: 99850168.8
(22) Date of filing: 11.11.1999
(51) Int. Cl.: F16C 33/62

(54) **Rolling bearing with coated element**

(30) Priority: 18.11.1998 SE 9803957
(71) Applicant: SKF Nova AB, 412 88 Göteborg (SE)
(72) Inventor: Sjöström, Hans, 411 25 Göteborg (SE)
(74) Representative: Westman, P. Börje I.

(57) **Abstract**

Rolling bearing (1) made of bearing steel and incorporating an inner race ring (2), an outer race ring (3) positioned coaxially about the inner race ring and a set of rolling bodies (4) positioned in the annular space between and in rolling contact with said inner ring and said outer ring, wherein at least one of the inner race ring, the outer race ring and the set of rolling bodies is provided with a surface coating incorporating an exterior carbon nitride layer (9) and an intermediate layer (8) interposed between the carbon nitride layer and the steel surface (7) of the coated components, said intermediate layer being hexagonal boron carbon nitride.

## Description

The present invention relates to rolling bearings made of bearing steel and incorporating inner race ring, outer race ring positioned coaxially about the inner race ring and a set of rolling bodies positioned in the annular space between and in rolling contact with said inner ring and said outer ring.

Many such bearing applications have poor tribological conditions, which results in bearing wear. The primary method for meeting this problem is to provide proper lubrication, but for many applications operating at high speeds, high load and elevated temperature ranges, the available lubricants will not give a satisfactory result.

For meeting such conditions, attempts have earlier been made to provide rolling bearing components with hard surface coatings, e.g. carbides and nitrides, such as TiN, TiC, CrN. Although nitride and carbide have high hardness and a good resistance against abrasive wear, they also provide a problem as their friction coefficients are rather high, which in combination with the high hardness leads to excessive abrasive wear on components in rolling or sliding contact with thus coated elements of the bearing.

Sufficient adhesive properties between coatings of this type and the substrate are further not obtained unless the temperature at application of the coating is so high (over 400° C), that the comparatively low alloyed bearing steels will be subjected to excessive softening and dimensional changes.

Therefore such coating materials do not give a satisfactorily result.

In sliding bearings have earlier been used coatings of diamond-like carbon (DLC). The adhesion of this material against the underlying bearing steel material is sufficient for sliding bearing applications, but as a result of the much higher contact stresses in rolling bearings and in combination with the fact that DLC is not thermally stable and have inferior elastic properties, it has proven itself that the adhesion is insufficient for most such applications and the DLC coating will flake off. However, there are earlier DLC solutions for rolling bearings with specific interlayers, although the limited elastic properties of the DLC coating have meant a limited usefulness of such applications.

The purpose of the present invention is to provide a well functioning rolling bearing made of bearing steel and incorporating an inner race ring, an outer race ring positioned coaxially about the inner race ring and a set of rolling bodies positioned in the annular space between and in rolling contact with said inner ring and said outer ring, and which has an increased life also under severe operation conditions with poor lubrication, and this has been achieved in that the bearing has been given the features defined in the characterizing part of the accompanying claim 1.

The rolling bearing according to the invention thus is made of bearing steel and incorporates an inner race ring, an outer race ring positioned coaxially about the inner race ring and a set of rolling bodies positioned in the annular space between and in rolling contact with said inner ring and said outer ring, and at least one of the inner race ring, the outer race ring and the set of rolling bodies is provided with a surface coating incorporating an exterior carbon nitride layer and an intermediate layer interposed between the carbon nitride layer and the steel surface of the coated component/s, said intermediate layer being hexagonal boron carbon nitride - B-N-C.

In accordance with the invention it is also envisaged that at least one of the associated bearing components, such as cage, seals, guide ring, etcetera, might also or alternatively be provided with a corresponding coating layer.

A Fulleren-like carbon nitride was applied, and while the adhesion between carbon nitride itself and bearing steel is rather poor, the carbon nitride gives very good tribological conditions, and improved surface hardness and wear resistance. However it also was found that a very thin layer (10 - 100 nm) of boron carbon nitride, preferably of the hexagonal type, has extremely good adhesive properties against bearing steel.

Finally it was found that it was possible to combine the excellent adhesive properties of the boron carbon nitride with the very good tribological and wear resistance properties of carbon nitride by using a vapour depositing technique and it was possible to apply in a single operation a thin boron carbon nitride layer of about 10 -100 nm and thereupon a carbon nitride layer of about 0,1 - 5 µm, with the interface between the boron carbon nitride and the carbon nitride forming a diffuse, gradual transition zone.

It was found that this agglomeration zone between the intermixed boron carbon nitride and carbon nitride layers, gave a very strong retention of the carbon nitride layer, which had an ability to withstand high speed and high load even at elevated temperatures and poor lubrication conditions, without resulting in flaking phenomena or the like.

The carbon nitride used has preferably a N content of 10 - 25 % by weight and the remainder carbon. The Fulleren-like phase of carbon nitride is achieved at temperatures between 50 and 600° C and is obtained in form of curved graphite flakes with substitutional N.

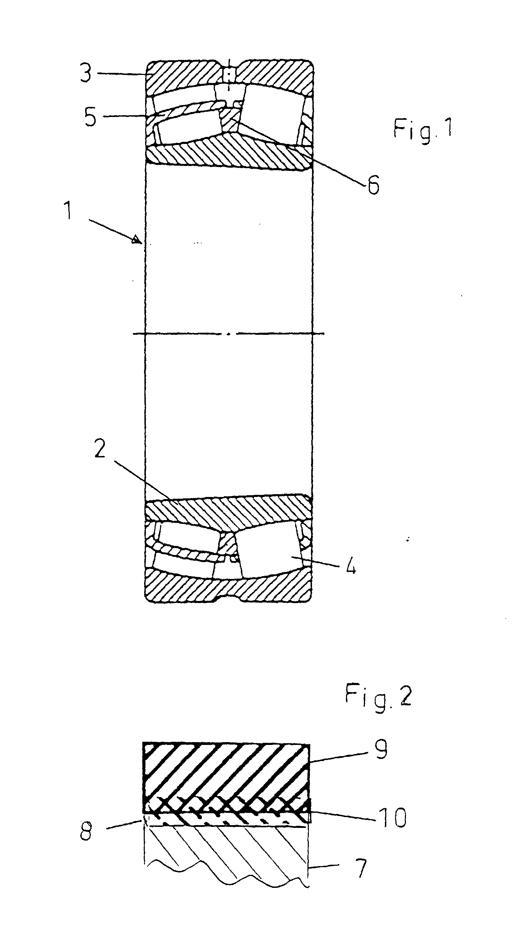

In Fig. 1 of the accompanying drawing is shown in cross section a rolling bearing 1, comprising an inner ring 2 an outer ring 3 and two rows of spherical rollers 4 arranged between the bearing rings, and in rolling contact with these. In the drawing is also shown cage 5, for spacing apart the rollers 4 and a guide ring 6 preventing the opposed faces of the rollers in the two rows from contacting each other.

In Fig. 2 is schematically shown an enlarged section of a portion 7 of any of the components rings 2, 3, rollers 4, cage 5, guide ring 6 and/or (not shown) seals or side shields for a rolling bearing, as that according to Fig. 1.
The portion 7 is only shown in a fragmentary mode and it is composed by an ordinary bearing steel grade. On the upper surface of the bearing component 7 is applied by means of a vapour depositing technique a well adhering layer 8 of hexagonal boron carbon nitride, and upon this is deposited, preferably in the same operational step, a layer 9 of carbon nitride, which during the deposition is allowed to agglomerate with the boron carbon nitride to form a diffuse intermediate layer 10, wherein the boron carbon nitride and the carbon nitride are amalgamated, thereby creating a strong bond between the boron carbon nitride with its good adhesive effect against steel and the carbon nitride with its very good tribological properties.

The invention is not limited to the embodiment described and illustrated in the accompanying drawing but modifications and variants are possible within the scope of the appended claims.

## Claims

1. Rolling bearing (1) made of bearing steel and incorporating an inner race ring (2), an outer race ring (3) positioned coaxially about the inner race ring and a set of rolling bodies (4) positioned in the annular space between and in rolling contact with said inner ring and said outer ring,
**characterized therein,**
that at least one of the inner race ring, the outer race ring and the set of rolling bodies is provided with a surface coating incorporating an exterior carbon nitride layer (9) and an intermediate layer (8) interposed between the carbon nitride layer and the steel surface (7) of the coated component/s, said intermediate layer being hexagonal boron carbon nitride.

2. A rolling bearing as claimed in claim 1, and further comprising associated bearing components such as cage (5), seals, guide ring (6) and the like, under operation of the bearing contacting the bearing rings and/or the rolling bodies,
**characterized therein,**
that at least one of the associated bearing components (5, 6) is provided with a surface coating incorporating an exterior carbon nitride layer (9) and an intermediate layer (8) interposed between the carbon nitride layer and the steel surface of the coated component/s, said intermediate layer being hexagonal boron carbon nitride.

3. A rolling bearing as claimed in anyone of claims 1 and 2,
**characterized therein,**
that the interface (10) between the boron carbon nitride layer (8) and the carbon nitride layer (9) forms a diffuse transition in which the material from the different layers are diffusely amalgamated into each other.

4. A rolling bearing as claimed in anyone of the preceeding claims,
**characterized therein,**
that the layers of boron carbon nitride (8) and carbon nitride (9) have been applied on the bearing component (7) by means of a vapour depositing technique.

5. A rolling bearing as claimed in anyone of the preceeding claims,
**characterized therein,**
that the boron carbon layer (8) has a thickness of 10 - 100 nm, whereas the thickness of the entire coating layer (8, 10, 9) is 0.1 - 5 µm.

6. A rolling bearing as claimed in anyone of the preceeding claims,
**characterized therein,**
that the carbon nitride has a content of N of 10 - 25 % by weight, and the remainder being C.
